# EUROPÄISCHE PATENTSCHRIFT

(11) **EP 4 537 058 B1**
(45) Veröffentlichungstag und Bekanntmachung des Hinweises auf die Patenterteilung: **15.04.2026**
(21) Anmeldenummer: 23739086.9
(22) Anmeldetag: 13.06.2023
(51) Int. Cl.: G01D 5/14

(54) **MAGNETISCHE SIGNALEINRICHTUNG UND DAMIT AUSGESTATTETES BAUTEIL**
MAGNETIC SIGNALLING DEVICE AND COMPONENT EQUIPPED WITH SAME
DISPOSITIF DE SIGNALISATION MAGNÉTIQUE ET COMPOSANT ÉQUIPÉ DE CELUI-CI

(30) Priorität: 13.06.2022 AT 504142022
(43) Veröffentlichungstag der Anmeldung: 16.04.2025
(73) Patentinhaber: Miba eMobility GmbH, 4663 Laakirchen (AT)
(72) Erfinder: KAGERER, Stefan, 4810 Gmunden (AT); SCHLAGER, Sebastian, 4850 Timelkam (AT)
(74) Vertreter: Burger, Hannes Alfred
(86) Internationale Anmeldenummer: PCT/AT2023/060185
(87) Internationale Veröffentlichungsnummer: WO 2023/240301

(56) Entgegenhaltungen:
- EP-A1- 0 213 732
- WO-A1-2017/092738
- DE-B3- 102004 063 462

## Beschreibung

Die Erfindung betrifft eine magnetische Signaleinrichtung zur Messung der Bewegung und/oder der Position eines Bauteiles einer Antriebsmaschine, insbesondere ein Polrad zum Einsatz in einem Drehwinkel- oder Drehzahlüberwachungssystem.

Die Bestimmung von Drehwinkeln und/oder von Drehzahlen rotierender Teile ist auf vielen technischen Gebieten eine wesentliche Aufgabe. Das am häufigsten genutzte Messprinzip für hochpräzise Anwendungen ist die optische bzw. photoelektrische Abtastung. Dieses ist jedoch grundsätzlich empfindlich gegenüber Umwelteinflüssen wie Schock- und Vibrationsbelastungen, Schmutz, Temperaturschwankungen und Feuchtigkeit. Zur Kompensierung gedachte spezielle Gehäusekonstruktionen führen zu gewissen Einschränkungen bei den Anbaumöglichkeiten, bei größeren Wellendurchmessern steigen die Kosten überproportional an, so dass technisch und wirtschaftlich sinnvolle Lösungen kaum mehr möglich sind.

Zur Messung des Drehwinkels werden beispielsweise Resolver, d.h. elektrische Transformatoren, eingesetzt. Die induktive Kopplung zwischen den Wicklungen des Transformators variiert abhängig vom Winkel. Bei Anlegen eines Wechselstromsignals ergibt die Messung an den Wicklungen des Transformators ein elektrisches Wechselstromsignal, dessen Amplitude proportional zum Winkel ist. Resolver sind wegen ihrer Zuverlässigkeit häufig in Sicherheitssystemen eingesetzt. Die Auflösung ist jedoch sehr stark durch die Qualität der Analog-Digital-Umwandlung bestimmt, so dass Resolver-basierte Systeme aufwendig sind, ebenso oftmals schwer, sperrig und teuer.

Als Alternative bieten sich Drehgeber mit magnetischem Messprinzip an. Durch ihre Unempfindlichkeit gegenüber Schock und Vibration sowie gegen Schmutz, Temperatur-schwankungen und Feuchtigkeit können Magnetgeber vor allem dort eingesetzt werden, wo die Lebensdauer der optischen Drehgeber trotz aufwändiger Schutzgehäuse eingeschränkt ist. Das sind Einsatzgebiete, in denen die Drehgeber hohen Temperaturen, Temperatur-schwankungen, Verschmutzung und Staubbelastung und/oder Belastungen/Kontaminationen mit Chemikalien und Lösemitteln ausgesetzt sind.

Beispielsweise auf dem Gebiet der Kraftfahrzeugtechnik ist die Drehzahlüberwachung an den Rädern zur Ansteuerung eines Antiblockiersystems oder einer Antischlupfregelung eine gängige Technik. Dafür und für sonstige Drehzahlüberwachungen werden zumeist Polräder mit einem benachbart angeordneten Sensor eingesetzt, welcher bei Rotation des Polrades relativ zum Sensor ein oszillierendes Signal ausgibt, dessen Frequenz ein Maß für die Rotationsgeschwindigkeit des Polrades und somit auch des mit diesem fest verbundenen rotierenden Teils des Fahrzeuges oder einer sonstigen Maschine ist. Auf dem Umfang des Polrades ist zumindest eine magnetische Spur angeordnet, die mit Spulen oder Magnetfeldsensoren ausgewertet wird. Das Polrad wird wie ein Inkrementalgeber als Drehzahl- oder Winkelsensor verwendet, es ist relativ unempfindlich gegen Verschmutzung und meist recht günstig herstellbar.

Die magnetische Teilung eines auf der drehenden Welle befestigten Polrads und/oder Encoders ist der Signalgeber für einen Sensor. Ein solcher Encoder ist beispielsweise aus der EP1030181A2 bekannt. Die Elektronik ist im Abtastkopf mit hoher Schutzart integriert und kann bei Bedarf komplett vergossen werden. Durch den zweiteiligen Systemaufbau mit Polrad und Abtastkopf können Magnetgeber ohne aufwändiges Schutzgehäuse und zusätzliche Kugellager eingesetzt werden - damit kann eine nahezu verschleißfreie Lösung mit sehr langer Lebensdauer realisiert werden. Ferner benötigen derartige Systeme kein freies Wellenende zur Installation und eignen sich daher gut für die Integration in Elektromotoren beispielsweise in Elektroautos. Die Veröffentlichung DE102016218930A1 zeigt ein weiteres solches Produkt. Alternativ zeigt beispielsweise die Veröffentlichung DE102018217274A1 die Herstellung eines Ringes aus gesinterten Teilmagneten jeweils verbunden mit polymer-basierten Zwischenstücken.

Polräder existieren in verschiedensten Ausführungsformen. So offenbart etwa die DE10210372A1 einen Drehwinkelsensor mit hoher Winkelauflösung, welcher eine Magnetspur auf einem Polrad aufweist, in der magnetische Nord- und Südpole abwechselnd angeordnet sind und deren Lage relativ zu einem drehfesten Bauteil mit einem Magnetfeldsensor erfasst wird. Als ein mögliches Ausführungsbeispiel ist ein Polrad aus Kunststoff oder Kunstharz mit eingemengten ferromagnetischen Bestandteilen beschrieben, das leicht und kostengünstig herstellbar ist. Die magnetischen Spuren können gemäß der DE10210372A1 u.a. aus magnetisierter Ferritfolie gebildet sein, die leicht und ebenfalls kostengünstig herstellbar sind. Alternativ sind auch magnetische Spuren aus in Gummi, Kunstharz oder Kautschuk gebundenen magnetisierten Ferriten möglich. Weiter offenbart die EP0213732A1 ein Sensorsystem zur Erfassung der Rotation eines Objektes, umfassend einen magnetischen Ring, der aus einem Kunstharz mit eingemengten ferromagnetischen Materialien aufgebaut ist. Die WO2017/092738A1 zeigt einen weiteren bekannten Drehwinkelsensor.

Aufgabe der vorliegenden Erfindung war es, die Nachteile des Standes der Technik zu überwinden und eine Vorrichtung zur Verfügung zu stellen, die in sicherer und von Störungen aller Art unbeeinflusster Art und Weise eine hohe Präzision bietet und flexibel in den verschiedensten Gebieten unter vielerlei Einsatzbedingungen anwendbar ist.

Diese technische Aufgabe wird durch einen magnetische Signaleinrichtung gemäß den Ansprüchen gelöst. Weitere Merkmale sind der Beschreibung und den Zeichnungen zu entnehmen.

Die erfindungsgemäße Vorrichtung basiert auf einer magnetischen Signaleinrichtung zur Messung der Bewegung und/oder der Position eines rotierenden Bauteiles, insbesondere eines Bauteils einer Antriebsmaschine, umfassend einen ring- oder scheibenförmigen Träger zur Verbindung dem Bauteil, sowie zumindest eine sich entlang des Umfanges erstreckenden Magnetspur in Form einer aus einer Gasphase direkt auf dem Träger abgeschiedenen, magnetisierbaren, hartmagnetischen Schicht mit zumindest 75 Gewichts% eines Seltenerdmagnetmaterials besteht, vorzugsweise einer oder mehreren der Verbindungen NdFeB und/oder Co5Sm und/oder Co17Sm2, wobei die Schicht nach einer Magnetisierung in Rotationsrichtung eine magnetische Struktur aufweist, die über einen Sensor messbar ist. Der Anteil des jeweiligen Seltenerdmetalls an sich beträgt dabei vorzugsweise weniger als 75 Gewichts% der hartmagnetischen Schicht.

Zur Lösung der gestellten Aufgabe ist eine derartige Signaleinrichtung erfindungsgemäß dadurch gekennzeichnet, dass der Träger aus einem Material mit höherer Duktilität als jener der hartmagnetischen Schicht besteht. Die geringe Schichtdicke der hartmagnetischen Schicht und deren Aufbringung auf duktilem Material relativiert die Sprödigkeit des hartmagnetischen Materials. Die besonders dünne Schicht des hartmagnetischen Materials auf dem Träger aus duktilem Material ermöglich trotz der Sprödigkeit des hartmagnetischen Materials ein direktes Aufpressen der Signaleinrichtung auf einen Bauteil, insbesondere auf eine Welle einer Maschine.

Bevorzugt besteht der Träger aus einem metallischen Material. Besonders bevorzugt ist dabei austenitischer oder ferritischer Edelstahl.

Gemäß einer weiteren vorzugsweisen Ausführungsform der Erfindung wurde die hartmagnetische Schicht mittels PVD-Verfahren auf dem Träger aufgebracht. Dies erlaubt die gezielte Optimierung der magnetischen Eigenschaften durch Änderungen der Schichtstruktur, die sich bei unterschiedlichen Prozessbedingungen ergeben. Durch eine konstante Schichtdicke, wie sie in PVD-Verfahren erzielt werden kann, ist auch eine hohe Rundlaufgenauigkeit der Signaleinrichtung gewährleistet. Dies ermöglicht den Einsatz beispielsweise von Polrädern auch in hohen Drehzahlbereichen über 30.000 Umdrehungen pro Minute.

Besonders vorteilhaft ist die Ausführung der erfindungsgemäßen magnetischen Signaleinrichtung als rotationssymmetrisches Polrad in einer Drehwinkel- und/oder Drehzahlmessanordnung.

Die Lösung der eingangs gestellten Aufgabe ist auch möglich für ein rotierendes Bauteil, insbesondere Bauteil einer Antriebsmaschine, mit einer magnetischen Signaleinrichtung zur Messung der Bewegung und/oder der Position des Bauteiles. Der Ausgangspunkt dafür ist ein Bauteil, umfassend einen ring- oder scheibenförmigen Träger zur Verbindung dem Bauteil, sowie zumindest eine sich entlang des Umfanges erstreckenden Magnetspur in Form einer aus einer Gasphase direkt auf dem Träger abgeschiedenen, magnetisierbaren, hartmagnetischen Schicht mit zumindest 75 Gewichts% eines Seltenerdmagnetmaterials besteht, vorzugsweise einer oder mehreren der Verbindungen NdFeB und/oder Co5Sm und/oder Co17Sm2, wobei die Schicht nach einer Magnetisierung in Rotationsrichtung eine magnetische Struktur aufweist, die über einen Sensor messbar ist. Wieder beträgt vorzugsweise der Anteil des jeweiligen Seltenerdmetalls an sich weniger als 75 Gewichts% der hartmagnetischen Schicht.

Erfindungsgemäß ist dieser Bauteil dadurch gekennzeichnet, dass der Träger aus einem Material mit höherer Duktilität als jener der hartmagnetischen Schicht besteht und mit dem rotierenden Bauteil verpresst ist.

Bevorzugt besteht für diesen Bauteil der Träger aus einem metallischen Material, vorzugsweise aus ferritischem Stahl.

Gemäß einem bevorzugten Ausführungsbeispiel der Erfindung wurde die hartmagnetische Schicht vorzugsweise mittels PVD-Verfahren auf dem Träger aufgebracht.

Zum besseren Verständnis der Erfindung wird diese anhand der nachfolgenden Abbildungen näher erläutert.

Es zeigen jeweils in stark vereinfachter, schematischer Darstellung:
- Fig. 1: eine schematische perspektivische Ansicht einer magnetischen Signaleinrichtung;
- Fig. 2: eine schematische Ansicht einer erfinderischen magnetischen Detektionseinrichtung in einer Draufsicht, und
- Fig. 3: eine Schnittdarstellung eines Teils einer magnetischen Signaleinrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

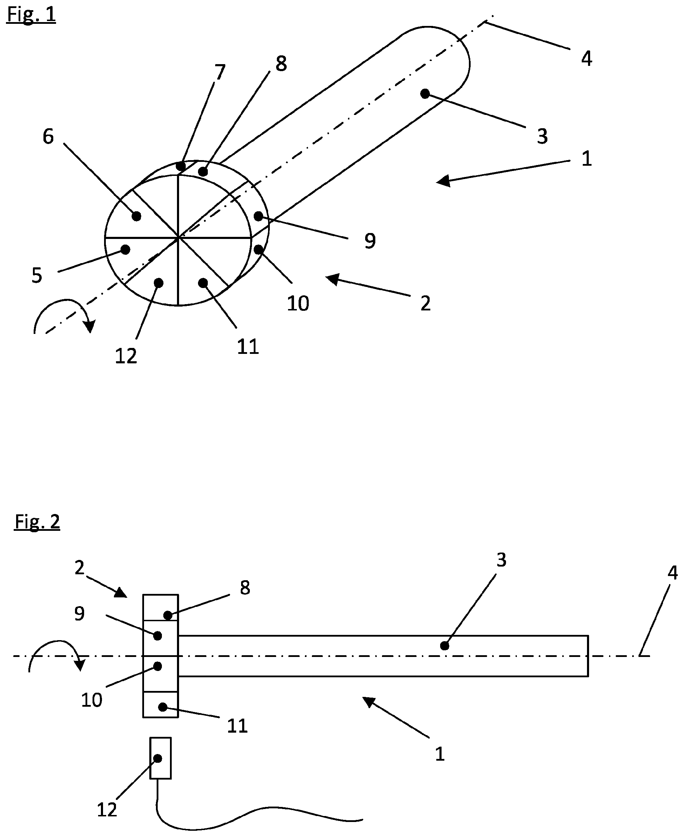

In Fig. 1 ist eine magnetische Signaleinrichtung 1 schematisch dargestellt, wie sie insbesondere zur Messung der Bewegung und/oder der Position eines rotierenden Bauteiles, insbesondere eines Bauteils einer Antriebsmaschine, im automotiven Bereich aber auch im Industrialbereich, eingesetzt wird. Dabei ist die magnetische Signaleinrichtung 1 beispielsweise mit einem rotationsymmetrischen Polrad 2 ausgebildet. Dieses Polrad 2 ist drehfest mit einer Welle 3 verbunden, die ein Beispiel für einen Bauteil darstellt, dessen Drehposition bzw. Drehgeschwindigkeit ermittelt werden soll. Die Welle 3 dreht sich um eine Drehachse 4 und ist beispielsweise mit einem Getriebe oder einer Antriebsmaschine (nicht dargestellt) verbunden. Auf diese Weise kann mit dem Polrad 2 die Drehung und/oder Position der Welle 3 und weiter des Getriebes bzw. der Antriebsmaschine gemessen werden.

Wie in Fig. 1 weiter ersichtlich ist, weist das Polrad entsprechende Abschnitte 5, 6, 7, 8, 9, 10, 11, 12 auf, die eine hartmagnetische, rein metallische Schicht ohne Polymeranteil mit abwechselnder Magnetisierung, als magnetische Pole, aufweist. Nach einer besonderen Ausführungsform der Erfindung ist damit eine maximale Einsatztemperatur (auch langzeitig) von bis zu 250°C möglich. Die hartmagnetische Schicht wird dabei über eine geeignete Magnetisierungseinrichtung magnetisiert. Wie aus Fig. 1 und Fig. 2 ersichtlich ist die hartmagnetische Schicht dabei an der vorderen Fläche des Polrades als auch an der radialen Umfangsfläche angeordnet. In Fig. 2 sind die einzelnen Pole 8, 9, 10, 11 an einem Teil der radialen Umfangsfläche gezeigt. Zusätzlich ist ein Detektor 12 einer Drehwinkel- und/oder Drehzahlmessanordnung dargestellt, der in einem vorbestimmten Abstand von dem Polrad 2 angeordnet ist. Bei dem Detektor 12 handelt es sich beispielsweise um einen Detektor/Sensor, der auf dem XMR- und/oder Hall-Messprinzip basiert und in hoher Auflösung die Drehung und/oder Position des Polrades 2 misst. Als XMR-Sensor bezeichnet man einen Sensor der magnetoresistiv arbeitet, das heißt, dass der Sensor unter dem Einfluss des magnetischen Flusses seinen Widerstand ändert. Dabei sind aus dem Stand der Technik sogenannte AMR, GMR und TMR Sensoren bekannt, die unter XMR-Sensoren subsumiert werden. Nach einer besonderen Ausführungsform der Erfindung weisen der Sensor und die magnetische Signaleinrichtung eine Auflösung von 10 bis 20 Bit, insbesondere auf einer oder mehreren Spuren, auf. Nach einer besonderen Ausführungsform ist zwischen dem Sensor und der magnetischen Signaleinrichtung ein Abstand zwischen 0,1 mm und 3 mm vorgesehen.

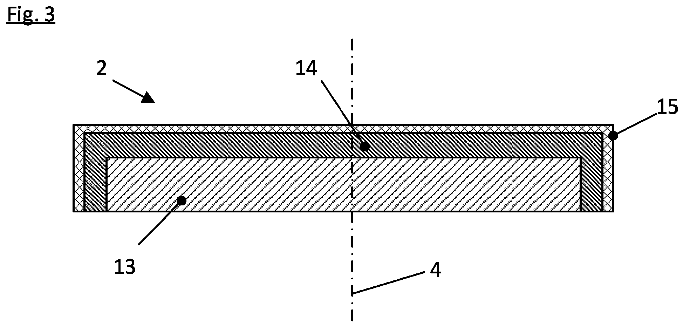

In Fig. 3 ist im Detail der Aufbau des Polrades 2 schematisch dargestellt. Das Polrad 2 weist dabei eine Tragstruktur 13 auf, beispielsweise in Scheiben- oder Ringform. Auf dieser Tragstruktur 13 aus höher duktilem Material als die hartmagnetische Schicht 5 bis 12 ist die erfindungsgemäße hartmagnetische Schicht aufgetragen. Bevorzugt besteht der Träger 13 aus einem metallischen Material wie beispielsweise Stahl, Edelstahl, Kupfer, Messing oder Aluminium. Besonders bevorzugt ist dabei austenitischer oder ferritischer Edelstahl, der für seine ausgezeichnete Duktilität bekannt ist. Sie zeichnen sich im Allgemeinen auch durch einen hohen Chrom- und niedrigen Kohlenstoffgehalt aus, ebenso durch ihre hervorragende Schweißbarkeit und andere positive technischen Eigenschaften aus.

Die besonders dünne Schicht - zwischen 1 und 150 µm - des hartmagnetischen Materials der Schicht 5 bis 12 auf dem Träger 13 aus duktilem Material ermöglich trotz der Sprödigkeit des hartmagnetischen Materials ein direktes Aufpressen der Signaleinrichtung 1 auf die Welle 3.

Im dargestellten Fall ist die hartmagnetische Schicht als zumindest eine sich entlang des Umfanges, d.h. die gesamte radiale Umfangsfläche und/oder an einer der beiden Stirnflächen des Polrades 2, erstreckende Magnetspur sehr geringer Schichtdicke aufgetragen. Nach einer besonderen Ausführung der Erfindung ist die hartmagnetische Schicht nur im Abtastbereich des Sensors 12 vorgesehen. Nach einer weiteren bevorzugten Ausführungsform der Erfindung ist über der hartmagnetischen Schicht eine Schutzschicht 15 vorgesehen, die die abgetastete hartmagnetische Schicht vor Beschädigung und/oder Umwelteinflüssen schützt.

Die hartmagnetische Schicht 5 bis 12 ist bevorzugt mittels PVD-Verfahren auf dem Träger 13 aufgebracht, um dadurch eine gezielte Optimierung der magnetischen Eigenschaften zu gestatten. Im Bereich der PVD-Verfahren ist es beispielsweise möglich Ionen über eine Glimmentladung einer Hohlkathode zu erzeugen und die so erzeugten Ionen auf eine Oberfläche aufzutragen bzw. zu sputtern.

Durch eine gezielte Steuerung des PVD-Prozesses kann die Schichtmorphologie von amorph, über teilkristallin bis hin zu kristallin eingestellt werden. Ebenso ermöglicht der Prozess die Abscheidung kristalliner, einphasiger Schichten wie z.B. Co17Sm2, Co5Sm. Dies kann durch Anpassung der Beschichtungsparameter erfolgen. Ebenfalls kann die Schichtstruktur für die verschiedenen Magnetisierungsverfahren wie z.B. in-plane oder out-of-plane optimiert werden.

Alternativ könnte die hartmagnetische Schicht auch über zumindest eines der Verfahren nach dem Hohlkathoden-Gasflusssputtern und/oder Hohlkathodensputtern und/oder Galvanisieren und/oder CVD und/oder Plasmaspritzen aufgebracht sein. Die Schicht 5 bis 12 besteht zumindest 75 Gewichts% aus einer oder mehreren der folgenden Verbindungen wie NdFeB und/oder Co5Sm und/oder Co17Sm2, insbesondere mit/ohne Dotierung oder Legierung mit weiteren Elementen wie beispielsweise Fe, Cu, Zr. Bezogen auf die Zusammensetzung der hartmagnetischen Schicht können bis zu 10 Gewichts% an Legierungselementen vorhanden sein. Auch andere Seltenerdmaterialien können zum Einsatz kommen, insbesondere Neodym, Praseodym, Terbium und Dysprosium. Das jeweilige Seltenerdmetall, z.B. Neodym bzw. Samarium, ist dabei vorzugsweise zu weniger als 75 Gewichts% in der Schicht 5 bis 12 vorhanden.

CoSm weist mit einer Curie-Temperatur von mehr als 700°C eine hervorragende Temperaturbeständigkeit auf. Weiters erlaubt die sehr homogene mikrokristalline Struktur der Schicht im Zusammenspiel mit einer gut kontrollierbaren Schichtdicke das sehr präzise Magnetisieren mit einer Winkelgenauigkeit von weniger als 0,1°. Werden derartige Polräder mit den geeigneten Sensoren kombiniert, können Auflösungen von bis zu 18 Bit erreicht werden. Dadurch ist eine erfindungsgemäße Signaleinrichtung optimal für rein digitale Signalverarbeitung geeignet und kann bisher nur durch optische Systeme abdeckbare Genauigkeiten bei gleichzeitig bekannter Robustheit erreichen. Die dabei erzielbare Genauigkeit erfüllt auch die Kriterien für den Einsatz in Elektromotoren zur Steuerung der Rotoren als Ersatz von Resolvern.

Ein weiterer Vorteil gegenüber dem Stand der Technik ist die Unempfindlichkeit gegenüber organischen Lösemitteln, Ölen sowie Fetten, da insbesondere keine kohlenstoffbasierten Polymere eingesetzt werden. Speziell in ölnebelbehafteten Umgebungen, die unter anderem im Bereich der Hochleistungselektromotoren und Antriebsstränge von E-Automobilen vorkommen, stellt die vorliegende Innovation einen entscheidenden Mehrwert zur Effizienzsteigerung dar.

Weiters bietet sich die Möglichkeit, auf das Gehäuse zu verzichten und eine Kombination von Polrad, das direkt auf die Welle gesetzt wird und separater Auswerteeinheit zu verwenden (Bearingless Encoders). Dadurch ist es einerseits möglich, die Messeinheit direkt, z.B. in einem Elektromotor, zu integrieren, außerdem wird kein freies Ende der Welle für eine Montage benötigt.

Weiters bedingt das Verwenden von hartmagnetischen Schichten eine sehr hohe Stabilität gegenüber Ent- oder Ummagnetisierung, wodurch die Stabilität gegenüber (auch sehr starken) Störfeldern signifikant gesteigert wird. So weisen beispielsweise Co5Sm-Verbindungen Koerzitivfeldstärken von bis zu 750 kA/m auf.

Werden höhere Umdrehungsgeschwindigkeiten benötigt, so wird bei konventionellen Systemen entweder ein Stützring außen auf das Polrad notwendig oder es muss auf Zahnräder als Signalgeber (Back-Bias-Anordnung) zurückgegriffen werden. Dies geht allerdings zu Lasten der Genauigkeit, außerdem benötigt eine solche Konfiguration einen sehr geringen Abstand zwischen Sensor und Rad, der aufgrund realer Toleranzen oft nicht gewährleistet werden kann.

Bevorzugt weist die hartmagnetische Schicht in ihrem Abtastbereich eine magnetische Remanenz von 0,1 T bis 1,3 T auf.

In einer vorteilhaften Ausführungsform der Erfindung weist die hartmagnetische Schicht in ihrem Abtastbereich eine mittlere Dicke zwischen 10 µm und 100 µm, bevorzugt mehr als 15 µm besonders bevorzugt mehr als 25 µm bzw. zwischen 25 µm und 60 µm, auf. Damit kann der Materialaufwand an den teuren seltenen Erden wesentlich reduziert werden.

Die Schichtdicke kann dabei mit einer Präzision von kleiner gleich +/- 0,2µm, ins-besondere kleiner gleich +/- 0,1µm, eingestellt werden, wodurch die Präzision entscheidend verbessert ist. Insbesondere kann bei In-Plane-gerichteter Magnetisierung durch das besonders hohe Aspektverhältnis zwischen Schichtdicke und magnetischer Polbreite ein Präzisionsvorteil erzielt werden.

Über der hartmagnetischen Schicht kann vorteilhafterweise im Abtastbereich eine weitere Schicht, vorzugsweise mit einer mittleren Dicke bis zu 10µm als Schutzschicht, zum Schutz der hartmagnetischen Schicht 5 bis 12 vorgesehen sein.

Neben der bisher dargestellten Ausführung der magnetischen Signaleinrichtung 1 mit einem Polrad 2 könnte auch ein rotationsymmetrischer Encoder vorgesehen sein.

Nach einer besonderen Ausführungsform der Erfindung ist bei Magnetisierung der hartmagnetischen Schicht eine Winkelgenauigkeit von kleiner gleich +-0,1° zwischen den unterschiedlich magnetisierbaren Bereichen erreichbar. Das bedeutet, dass die Struktur der Magnetisierung sehr fein realisiert werden kann.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind, insofern sie unter den Schutzbereich der beigefügten Ansprüche fallen, welche die Erfindung definieren.

## Patentansprüche

1. Magnetische Signaleinrichtung (1) zur Messung der Bewegung und/oder der Position eines rotierenden Bauteiles (3), insbesondere eines Bauteils einer Antriebsmaschine, umfassend einen ring- oder scheibenförmigen Träger (13) zur Verbindung mit dem Bauteil (3), sowie zumindest eine sich entlang des Umfanges erstreckenden Magnetspur in Form einer aus einer Gasphase direkt auf dem Träger abgeschiedenen, magnetisierbaren, hartmagnetischen Schicht (5 bis 12) mit zumindest 75 Gewichts% eines Seltenerdmagnetmaterials besteht, vorzugsweise aus einer oder mehreren der Verbindungen NdFeB und/oder Co5Sm und/oder Co17Sm2, wobei die Schicht (5 bis 12) nach einer Magnetisierung entlang des Umfanges eine magnetische Struktur aufweist, die über einen Sensor (12) messbar ist, **dadurch gekennzeichnet, dass** der Träger (13) aus einem Material mit höherer Duktilität als jener der hartmagnetischen Schicht (5 bis 12) besteht.

2. Magnetische Signaleinrichtung nach Anspruch 1, **dadurch gekennzeichnet, dass** der Träger (13) aus einem metallischen Material besteht, vorzugsweise aus austenitischem oder ferritischem Edelstahl.

3. Magnetische Signaleinrichtung nach Anspruch 1 oder 2, **dadurch gekennzeichnet, dass** die hartmagnetische Schicht (5 bis 12) vorzugsweise mittels PVD-Verfahren auf dem Träger (13) aufgebracht wurde.

4. Magnetische Signaleinrichtung nach Anspruch 3, **dadurch gekennzeichnet, dass** die hartmagnetische Schicht (5 bis 12) durch eine gezielte Steuerung des PVD-Prozesses von amorph, über teilkristallin bis hin zu kristallin eingestellt wird.

5. Magnetische Signaleinrichtung nach Anspruch 1, in einer Ausführung als rotationssymmetrisches Polrad (2) für eine Drehwinkel- und/oder Drehzahlmessanordnung.

6. Rotierendes Bauteil (3), insbesondere Bauteil einer Antriebsmaschine, mit einer magnetischen Signaleinrichtung (1) gemäß einem der vorhergehenden Ansprüche, wobei der Träger (13) mit dem rotierenden Bauteil (3) verpresst ist.

## Claims

1. A magnetic signaling device (1) for measuring the movement and/or the position of a rotating component (3), in particular a component of a driving machine, comprising an annular or disc-shaped carrier (13) for connection to the component (3), and at least one magnetic track extending along the circumference in the form of a magnetizable, hard-magnetic layer (5 to 12) deposited directly on the carrier from a gas phase and consists of at least 75% by weight of a rare-earth magnetic material, preferably from one or more of the compounds NdFeB and/or Co5Sm and/or Co17Sm2, wherein the layer (5 to 12), after magnetization along the circumference, has a magnetic structure which can be measured by a sensor (12),
**characterized in that**
the carrier (13) consists of a material with higher ductility than that of the hard magnetic layer (5 to 12).

2. The magnetic signaling device according to claim 1, **characterized in that** the carrier (13) consists of a metallic material, preferably austenitic or ferritic stainless steel.

3. The magnetic signaling device according to claim 1 or 2, **characterized in that** the hard magnetic layer (5 to 12) was preferably applied to the carrier (13) by means of a PVD process.

4. The magnetic signaling device according to claim 3, **characterized in that** the hard magnetic layer (5 to 12) is adjusted from amorphous to semi-crystalline to crystalline by selective control of the PVD process.

5. The magnetic signaling device according to claim 1, in an embodiment as a rotationally symmetrical pole wheel (2) for a rotational angle and/or rotational speed measuring arrangement.

6. A rotating component (3), in particular a component of a drive machine, with a magnetic signaling device (1) according to one of the preceding claims, wherein the carrier (13) is pressed with the rotating component (3).

## Revendications

1. Dispositif de signalisation magnétique (1) permettant de mesurer le mouvement et/ou la position d'un composant rotatif (3), en particulier d'un composant d'une machine d'entraînement, comprenant un support en forme d'anneau ou de disque (13) permettant une connexion au composant (3), ainsi qu'au moins une piste magnétique s'étendant le long de la circonférence sous la forme d'une couche magnétique dure (5 à 12) magnétisable déposée directement sur le support à partir d'une phase gazeuse et contenant au moins 75 % en poids d'un matériau magnétique à base de terre rare, de manière préférée d'un ou plusieurs parmi les composés NdFeB et/ou Co5Sm et/ou Col7Sm2, dans lequel la couche (5 à 12), après une magnétisation le long de la circonférence, présente une structure magnétique qui peut être mesurée par l'intermédiaire d'un capteur (12), **caractérisé en ce que**
le support (13) est constitué d'un matériau présentant une ductilité supérieure à celle de la couche magnétique dure (5 à 12).

2. Dispositif de signalisation magnétique selon la revendication 1, **caractérisé en ce que** le support (13) est constitué d'un matériau métallique, de manière préférée d'acier inoxydable austénitique ou ferritique.

3. Dispositif de signalisation magnétique selon la revendication 1 ou 2, **caractérisé en ce que** la couche magnétique dure (5 à 12) a été appliquée sur le support (13) de manière préférée au moyen du procédé PVD (dépôt physique en phase vapeur).

4. Dispositif de signalisation magnétique selon la revendication 3, **caractérisé en ce que** la couche magnétique dure (5 à 12) est ajustée d'amorphe à cristalline en passant par semi-cristalline grâce à une commande ciblée du processus PVD.

5. Dispositif de signalisation magnétique selon la revendication 1, dans un mode de réalisation sous forme de roue polaire à symétrie de rotation (2) pour un dispositif de mesure d'angle de rotation et/ou de vitesse de rotation.

6. Composant rotatif (3), en particulier composant d'une machine d'entraînement, comprenant un dispositif de signalisation magnétique (1) selon l'une quelconque des revendications précédentes, dans lequel le support (13) est serti avec le composant rotatif (3).
